# EUROPEAN PATENT APPLICATION

(11) **EP 4 686 830 A1**
(43) Date of publication of application: **04.02.2026**
(21) Application number: 25192186.2
(22) Date of filing: 28.07.2025
(51) Int. Cl.: F04C 18/16, F04C 28/12

(54) **SCREW COMPRESSOR AND ITS SLIDE VALVE**

(30) Priority: 29.07.2024 CN 202411029622
(71) Applicant: Carrier Corporation, Palm Beach Gardens, FL 33418 (US)
(72) Inventor: WANG, Lifeng, Shanghai, 201206 (CN)
(74) Representative: Dehns

(57) **Abstract**

This application provides a screw compressor (1) and a slide valve (2) thereof. The slide valve (2) includes: a valve body (21) having a cylindrical shape extending in an axial direction, with a side surface having a pressure discharge surface (211) that matches an outer peripheral contour of a rotor of the screw compressor (1); a discharge chamber (22) provided at an end of the pressure discharge surface (211) along the axial direction; a slider (23) provided in the discharge chamber (22), and configured to slide along a radial direction of the valve body (21), a shape of an outer edge of the slider (23) matching a shape of the pressure discharge surface (211); and a spring (24) connected to the slider (23) and configured to drive the slider (23) to slide to a position where the outer edge of the slider (23) is flush with the pressure discharge surface (211). According to the above structure of the slide valve (2), a discharge position of a compressed working medium can be adjusted, an internal volume ratio can be changed, an internal pressure can match an external pressure at the end of compression, an additional power loss can be reduced, an operating efficiency of the compressor can be improved, and noise caused by pressure mismatch can be reduced.

## Description

This application relates to the technical field of compressors, and particularly to a screw compressor and a slide valve thereof.

A screw compressor is a common type of a compressor in a large and medium central air-conditioning system, and a working principle of the screw compressor is to compress and deliver a gas working medium via two rotors meshing with each other. A slide valve plays a very important role in the screw compressor. The slide valve is located inside an exhaust chamber of the screw compressor and is used to control a flow rate of a gas. Under different working conditions, by controlling the movement of the slide valve, an internal volume ratio Vᵢ = V_{cys}/V_{cyc} (where V_{cyc} represents a volume value when an inter-gear volume communicates with an exhaust aperture, that is, a working volume at the end of a compression process, and V_{cys} represents a volume value at a moment when the inter-gear volume is disconnected from an aspiration orifice, that is, a working volume at the end of an aspiration process) of the screw compressor can be adjusted to reduce additional power consumption of the compressor during operation.

However, a slide valve in a fixed-frequency screw compressor is usually in a fixed position, and an internal volume ratio cannot be adjusted. Under different working conditions, a fixed internal volume ratio easily causes a screw compressor to be in an under-compression state (additional power consumption of isochoric compression is generated) or an over-compression state (additional power consumption of isochoric expansion is generated), resulting in defects of low operating efficiency, high energy consumption, and high noise.

This application provides a screw compressor and a slide valve thereof to resolve or alleviate some of problems that exist in the related art.

According to a first aspect of the invention, there is provided a slide valve applied for a screw compressor, the slide valve includes a valve body having a cylindrical shape extending in an axial direction, with a side surface having a pressure discharge surface that matches an outer peripheral contour of a rotor of the screw compressor; a discharge chamber provided at an end of the pressure discharge surface along the axial direction; a slider provided in the discharge chamber, and configured to slide along a radial direction of the valve body, a shape of an outer edge of the slider matching a shape of the pressure discharge surface; and a spring connected to the slider and configured to drive the slider to slide to a position where the outer edge of the slider is flush with the pressure discharge surface.

Optionally, the discharge chamber includes a support surface separated from and disposed opposite to the pressure discharge surface, and a guide rod fixedly connected to the support surface and extending in a direction parallel to a sliding direction of the slider, in which the spring is sleeved on an outer periphery of the guide rod, and the two ends of the spring respectively abut against the support surface and the slider.

Optionally, the slider is provided with a first groove and a second groove that extend in the sliding direction and communicate with each other, and the first groove is disposed at an end of the second groove close to the pressure discharge surface, and an inner diameter of the first groove matches an outer diameter of the guide rod, and an inner diameter of the second groove matches an outer diameter of the spring.

Optionally, the support surface is provided with a third groove and a fourth groove that extend in the sliding direction and communicate with each other, and the third groove is located at an end of the fourth groove closer to the pressure discharge surface, and an inner diameter of the third groove matches the outer diameter of the spring, and an inner diameter of the fourth groove matches the outer diameter of the guide rod.

Optionally, the discharge chamber further includes: a limiting surface extending along the sliding direction of the slider to form a sliding surface abutting against a side surface of the slider; and a shoulder located at an end of the limiting surface close to the pressure discharge surface and protruding from the limiting surface, and the side surface of the slider is provided with a step portion corresponding to the shoulder, and when the slider slides to the position where the outer edge is flush with the pressure discharge surface, the step portion abuts against the shoulder.

Optionally, the screw compressor is a twin-screw compressor, the pressure discharge surface includes a first pressure discharge surface and a second pressure discharge surface that respectively abut against a female rotor and a male rotor of the twin-screw compressor, and the first pressure discharge surface and the second pressure discharge surface are connected to each other, and
the slider is V-shaped, and includes a first outer edge portion and a second outer edge portion connected to each other, the first outer edge portion is disposed corresponding to the first pressure discharge surface, and the second outer edge portion is disposed corresponding to the second pressure discharge surface.

Optionally, the valve body has a central axis and a slide rod mounting groove extending along the central axis, and the slider has an avoidance through hole corresponding to a position of the slide rod mounting groove.

Optionally, the slide valve further includes: a slider limiting barrier fixed to an end of the valve body where the discharge chamber is provided.

Optionally, a screw compressor comprises the above slide valve.

According to the above structure of the slide valve, a discharge position of a compressed working medium can be adjusted, an internal volume ratio can be changed, an internal pressure can match an external pressure at the end of compression, an additional power loss can be reduced, an operating efficiency of the compressor can be improved, and noise caused by pressure mismatch can be reduced.

Certain exemplary embodiments will now be described in greater detail by way of example only and with reference to the accompanying drawings in which:
Fig. 1 is a schematic diagram of a three-dimensional structure of an exhaust side of a compressor.
Fig. 2 is a schematic diagram of a three-dimensional structure of a slide valve when a slider is in a downward moving state.
Fig. 3 is a schematic structural diagram of the slide valve when the slider is in the downward moving state.
Fig. 4 is a cross-sectional view taken along an A-A section line in Fig. 3.
Fig. 5 is a schematic diagram of projection of an exhaust aperture in an up-down direction.
Fig. 6 is a schematic diagram of a three-dimensional structure of the slide valve in a state where the slider moves upward until an outer edge of the slider is flush with a pressure discharge surface.
Fig. 7 is a schematic structural diagram of the slide valve in a state where the slider moves upward until the outer edge of the slider is flush with the pressure discharge surface.
Fig. 8 is a cross-sectional view taken along a B-B section line in Fig. 6.
Fig. 9 is a partially enlarged schematic diagram of a discharge chamber.

Reference numerals: screw compressor 1, housing 11, female rotor 12, male rotor 13, slide valve 2, valve body 21, pressure discharge surface 211, first pressure discharge surface 2111, second pressure discharge surface 2112, discharge chamber 22, support surface 221, guide rod 222, third groove 223, fourth groove 224, limiting surface 225, shoulder 226, slider 23, first outer edge portion 231, second outer edge portion 232, first groove 233, second groove 234, step portion 235, avoidance through hole 236, mounting hole 237, spring 24, slide rod mounting groove 25, slider limiting barrier 26, piston rod 3.

The technical solutions in embodiments of this application will be clearly and completely described below with reference to the accompanying drawings in some embodiments of this application, and obviously, the described embodiments are merely a part of some embodiments of this application, and are not all embodiments. Based on some embodiments in this application, all other embodiments obtained by those skilled in the art without creative work fall within the protection scope of this application.

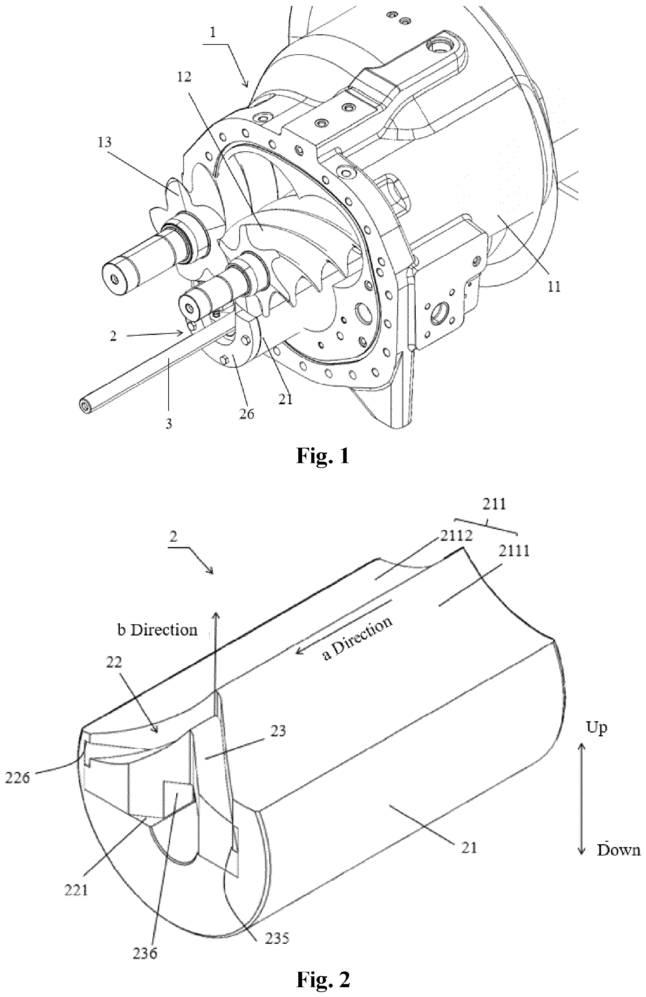

As shown in Fig. 1, this application provides a screw compressor 1. The screw compressor 1 is a twin-screw compressor, and includes a housing 11, a female rotor 12 and a male rotor 13 meshing with each other in the housing 11, and a rotor driving mechanism (not shown) driving the male rotor 13 to rotate around an axial direction of the housing 11 (a direction in Fig. 2). The male rotor 13 drives the female rotor 12 to rotate, rotation directions of the female rotor 12 and the male rotor 13 are opposite, and when the female rotor 12 and the male rotor 13 rotate, a working medium can be aspirated, compressed, and discharged. The screw compressor 1 further includes a slide valve 2 and a cylinder driving the slide valve 2 to move along the axial direction of the housing 11 (the whole cylinder is not shown, and only a piston rod 3 constituting the cylinder is shown), and the piston rod 3 of the cylinder is fixed to the slide valve 2. It should be noted that, in order to facilitate the illustration of positions of the female rotor 12, the male rotor 13, and the slide valve 2 in the housing 11, the positions of the female rotor 12, the male rotor 13, and the slide valve 2 in the axial direction of the housing 11 shown in Fig. 1 is only for illustration, and does not represent actual positions thereof in the housing 11.

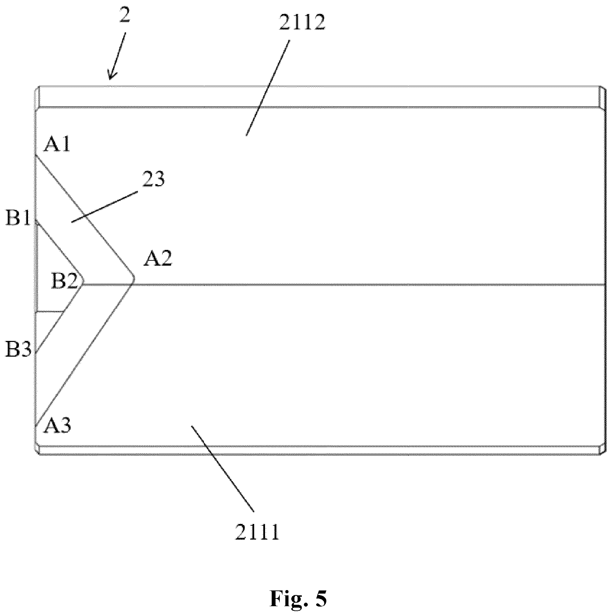

As shown in Figs. 2, 3, and 4, the slide valve 2 includes: a valve body 21, a discharge chamber 22, a slider 23, and a spring 24. Specifically, the valve body 21 is a cylindrical shape and extends in the axial direction, and a side surface of the valve body 21 has a pressure discharge surface 211 that matches outer peripheral contours of the female rotor 12 and the male rotor 13 of the screw compressor 1. The discharge chamber 22 is provided at an end of the pressure discharge surface 211 along the axial direction. The slider 23 is provided in the discharge chamber 22 and can slide along a radial direction of the valve body 21 (b direction in Fig. 2, the radial direction refers to a direction along a diameter or radius of the valve body 21, and the radial direction is perpendicular to the axial direction), and a shape of an outer edge of the slider 23 matches a shape of the pressure discharge surface 211. The spring 24 is connected to the slider 23, and is configured to drive the slider 23 to slide to a position where the outer edge of the slider 23 is flush with the pressure discharge surface 211 (position shown in Fig. 5).

In some embodiments, a working process of the screw compressor 1 is as follows: when the male rotor 13 rotates and drives the female rotor 12 to rotate synchronously, a working medium is aspirated and compressed while moving along the axial direction of the female rotor 12 and/or the male rotor 13, the compression process ends until an elementary space between a pair of gears of the screw compressor 1 communicates with an exhaust aperture of the screw compressor 1, and then an exhaust process begins, and the compressed working medium is discharged from the screw compressor 1 through the discharge chamber 22.

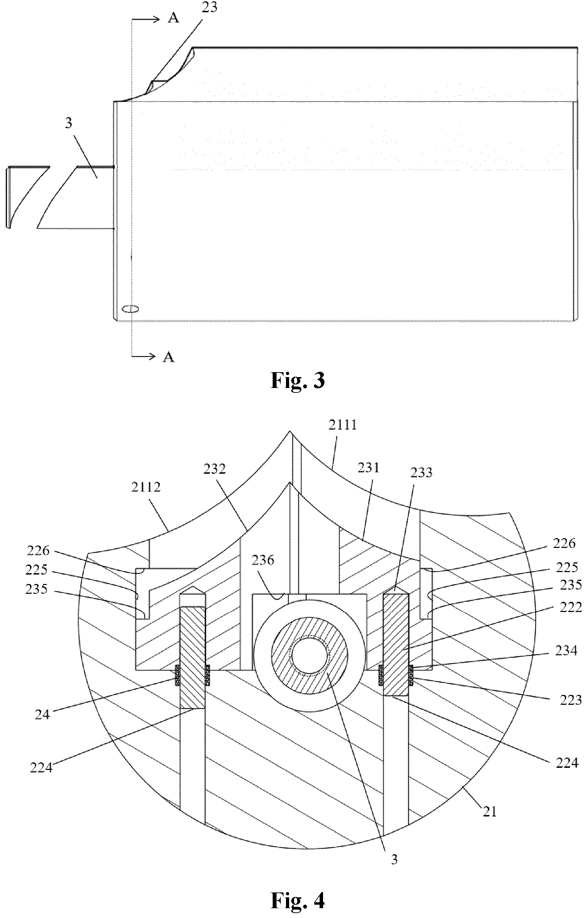

If a pressure (that is, an internal pressure) of the elementary space between a pair of gears communicating with the discharge chamber 22 is greater than an exhaust pressure (external pressure) of the screw compressor 1, that is, when the screw compressor 1 is in an over-compression state, the slider 23 moves inward in the radial direction due to the pressure (that is, moves downward in Fig. 2). In the state shown in Figs. 2 and 4, due to the downward movement of the slider 23, the exhaust aperture provided by the discharge chamber 22 for an air flow to pass through is an aperture that includes an outer edge area of the slider 23, so that a size of the aperture increases, and an internal volume ratio decreases. Furthermore, as shown in Fig. 5, projection of the exhaust aperture provided by the discharge chamber 22 for the air flow to pass through is a curved surface including A1, A2, and A3.

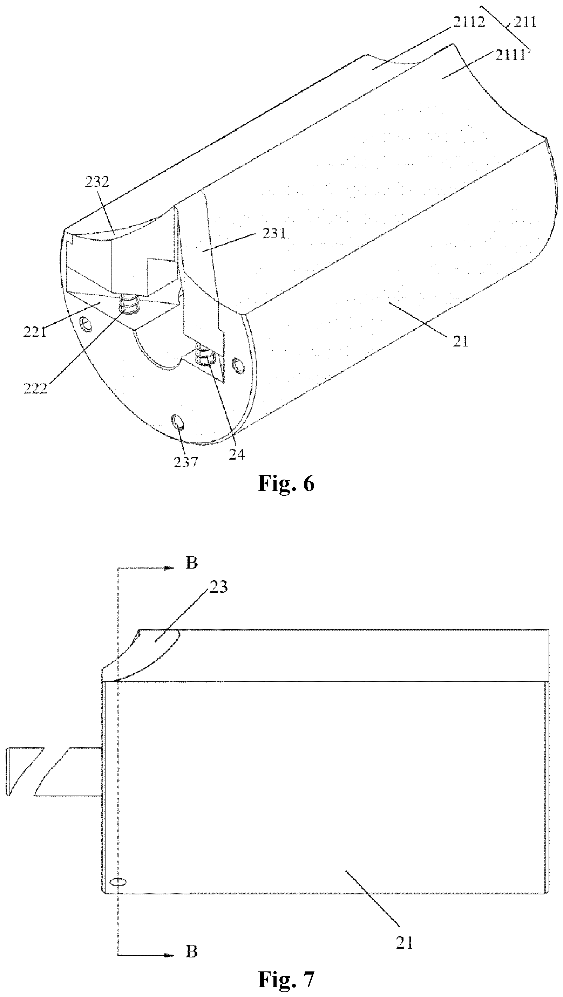

As shown in Figs. 6, 7, and 8, if the pressure of the elementary space between a pair of gears communicating with the discharge chamber 22 is less than the exhaust pressure of the screw compressor 1, that is, the screw compressor 1 is in an under-compression state, the slider 23 moves outward in the radial direction (that is, moves upward in Fig. 2) by an elastic restoring force of the spring 24 and the exhaust pressure, and specifically moves to the position where the outer edge of the slider 23 is flush with the pressure discharge surface 211 as shown in Fig. 5.

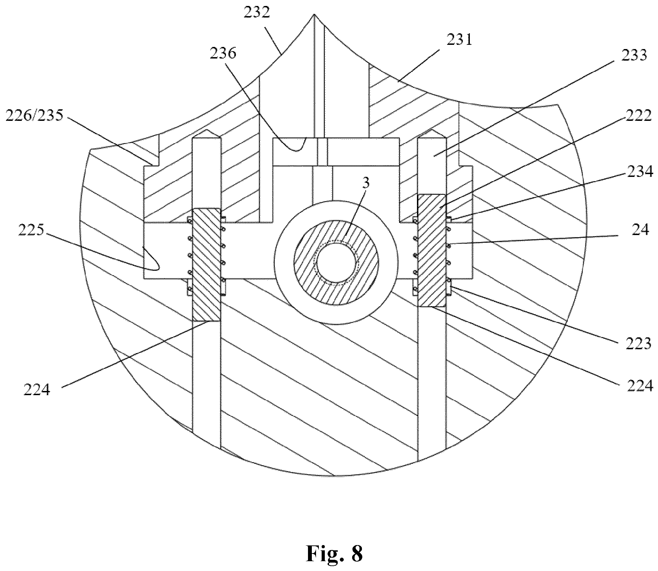

In the state shown in Figs. 6 and 8, since the slider 23 is restored to the position where the outer edge is flush with the pressure discharge surface 211, the exhaust aperture actually provided by the discharge chamber 22 for the air flow to pass through becomes an aperture on a side of the slider 23 away from the pressure discharge surface 211, and does not include the outer edge area of the slider 23, so that the size of the aperture is reduced, and the internal volume ratio is increased. Furthermore, as shown in Fig. 5, the projection of the exhaust aperture provided by the discharge chamber 22 for the air flow to pass through is a curved surface including B1, B2, and B3.

Therefore, according to the above structure of the slide valve in some embodiments, different internal volume ratios under different working conditions can be provided, the internal pressure can match the external pressure at the end of the compression, an additional power loss can be reduced, an operating efficiency of the compressor can be improved, and noise caused by pressure mismatch can be reduced. In some embodiments of this application, the screw compressor 1 is a fixed-frequency screw compressor, and the above slide valve 2 can adjust an internal volume ratio of the fixed-frequency screw compressor, thereby improving an operating efficiency of the fixed-frequency screw compressor under different working conditions.

In an optional embodiment, as shown in Fig. 6, the pressure discharge surface 211 includes a first pressure discharge surface 2111 and a second pressure discharge surface 2112 that respectively abut against the female rotor 12 and the male rotor 13, and the first pressure discharge surface 2111 and the second pressure discharge surface 2112 are connected to each other. Specifically, the first pressure discharge surface 2111 is a first arc surface that matches the outer peripheral contour of the female rotor 12, and the second pressure discharge surface 2112 is a second arc surface that matches the outer peripheral contour of the male rotor 13. The first arc surface and the second arc surface are both arc surfaces that are recessed on the cylindrical valve body 21.

In an optional embodiment, referring to Figs. 6 and 8, the discharge chamber 22 is provided at an end of the valve body 21 in the axial direction, and is roughly a groove-shaped or chamber-shaped structure formed by cutting off a part of the end of the valve body 21. The discharge chamber 22 includes support surfaces 221 and guide rods 222. Each of the support surfaces 221 is separated from and disposed opposite to the pressure discharge surface 211 (here, opposite disposing is not strictly opposite, but can be opposite in an extension direction or at least partially opposite). Each of the guide rods 222 is fixedly connected to the support surface 221 and extends in a direction parallel to a sliding direction of the slider 23. The spring 24 is sleeved on an outer periphery of the guide rod 222, and two ends of the spring 24 respectively abut against the support surface 221 and the slider 23.

By providing the guide rod 222, the sliding of the slider 23 can be guided, the slider 23 can be ensured to fit with the discharge chamber 22 by sliding along an extension direction of the guide rod 222, so that movement stability of the slider can be ensured, and the compressed working medium can be discharged from an appropriate position.

By providing the support surface 221, a limit position of the downward movement of the slider 23 is limited, so that the size of the discharge chamber 22 can be controlled within a reasonable range to ensure the matching of the internal pressure and the external pressure.

In some embodiments, the two ends of the spring 24 may also be respectively fixed to the support surface 221 and the slider 23 to ensure the stability of the spring 24. When the two ends of the spring 24 are not fixed to the support surface 221 and the slider 23, disassembly and maintenance of the slide valve 2 are easily performed, and the convenience of use is improved. In some embodiments, the guide rod 222 may also be detachably connected to the support surface 221 for easy disassembly and maintenance without affecting a guiding effect of the guide rod 222, and this application does not limit this.

Continuing to refer to Fig. 6, the slider 23 is V-shaped, and includes a first outer edge portion 231 and a second outer edge portion 232 connected to each other. The first outer edge portion 231 is disposed corresponding to the first pressure discharge surface 2111, and the second outer edge portion 232 is disposed corresponding to the second pressure discharge surface 2112. Specifically, the first outer edge portion 231 is a third arc surface that matches the outer peripheral contour of the female rotor 12, and the second outer edge portion 232 is a fourth arc surface that matches the outer peripheral contour of the male rotor 13. When the slider 23 slides to the position where the outer edge of the slider 23 is flush with the pressure discharge surface 211, the third arc surface is flush with the first pressure discharge surface 2111, and the fourth arc surface is flush with the second pressure discharge surface 2112. In this case, the pressure discharge surface 211 is extended and expanded by the third arc surface and the fourth arc surface, so that the size of the exhaust aperture is reduced.

As shown in Fig. 8, in an optional embodiment, the slider 23 is provided with a first groove 233 and a second groove 234 which extend in the sliding direction and communicate with each other. The first groove 233 is disposed at an end of the second groove 234 close to the pressure discharge surface 211. An inner diameter of the first groove 233 matches an outer diameter of the guide rod 222, and an inner diameter of the second groove 234 matches an outer diameter of the spring 24. In some embodiments, the spring 24 is sleeved on the outside of the guide rod 222, the outer diameter of the spring 24 is larger than the outer diameter of the guide rod 222, and the inner diameter of the first groove 233 is smaller than the inner diameter of the second groove 234, so that when the spring 24 is in the second groove 233, the spring 24 can be limited in a circumferential direction and limited at a communication portion of the first groove 233 and the second groove 234, thereby ensuring position stability of the spring 24 when the spring 24 is compressed and elastically restored. In addition, by providing the first groove 233 and the second groove 234 with different inner diameters, the guide rod 222 can be prevented from shaking in the first groove 233.

In an optional embodiment, the support surface 221 is provided with a third groove 223 and a fourth groove 224 which extend in the sliding direction and communicate with each other. The third groove 223 is located at an end of the fourth groove 224 closer to the pressure discharge surface 211. An inner diameter of the third groove 223 matches the outer diameter of the spring 24, and an inner diameter of the fourth groove 224 matches the outer diameter of the guide rod 222. In some embodiments, the third groove 223 and the fourth groove 224 can be arranged in a "T" shape, the fourth groove 224 and an end of the guide rod 222 are interference fit to fix the guide rod 222, and the guide rod 222 is prevented from being displaced when the slider 23 slides.

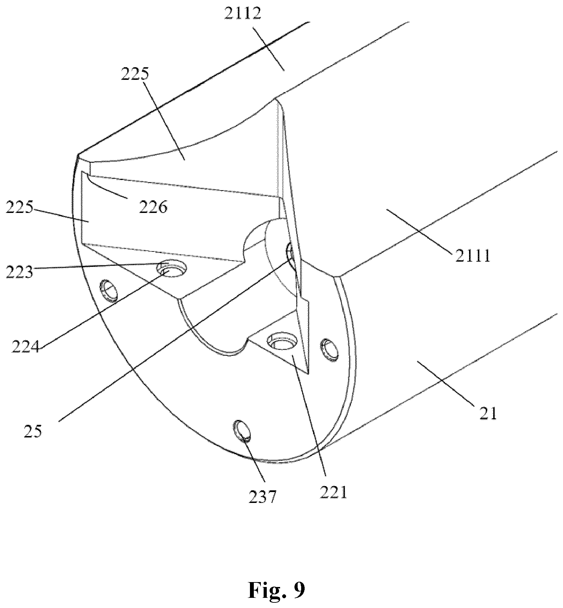

In an optional embodiment, as shown in Figs. 4 and 9, the discharge chamber 22 also includes: limiting surfaces 225 and shoulders 226. Each of the limiting surfaces 225 extends along the sliding direction of the slider 23 to form a sliding surface abutting against the side surface of the slider 23. Each of the shoulders 226 is located at an end of the limiting surface 225 close to the pressure discharge surface 211 and protrudes from the limiting surface 225. The side surface of the slider 23 is provided with a step portion 235 corresponding to the shoulder 226. When the slider 23 slides to the position where the outer edge is flush with the pressure discharge surface 211, the step portion 235 abuts against the shoulder 226. According to the above method, the limiting surface 225 can limit the sliding direction of the slider 23, and the shoulder 226 can limit an upper limit of the sliding of the slider 23, prevent the slider 23 from protruding from the pressure discharge surface 211, and ensure normal rotation and engagement of the female rotor 12 and the male rotor 13. It should be noted that although some embodiments show that an abutting surface between the step portion 235 and the shoulder 226 is a plane, it can be understood that the abutting surface between the step portion 235 and the shoulder 226 can also be an arc surface, and this application does not limit the abutting surface.

In an optional embodiment, as shown in Fig. 9, the valve body 21 has a central axis and a slide rod mounting groove 25 extending along the central axis. Referring to Fig. 4 or 8, the slider 23 has an avoidance through hole 236 corresponding to a position of the slide rod mounting groove 25. The slide rod mounting groove 25 is used to allow a driving slide rod to be mounted. The driving slide rod may be a piston rod 3 shown in Fig. 1, and extends toward an exhaust side of the valve body 21 in the axial direction. The driving slide rod can drive the entire slide valve 2 to move in the axial direction, thereby changing an exhaust volume of the screw compressor 1 and ensuring that operating power of the screw compressor 1 is in an appropriate range. By providing the avoidance through hole 236, connection between the piston rod 3 and the valve body 21 can be ensured, and normal operation of the slide valve 2 can also be ensured.

In an optional embodiment, as shown in Fig. 1, the slide valve 2 also includes a slider limiting barrier 26 fixed to an end of the valve body 21 where the discharge chamber 22 is provided. Specifically, the slider limiting barrier 26 is separated from the end and forms a space for the slider 23 to slide in the radial direction. By providing the slider limiting barrier 26, the slider 23 can slide in the radial direction between the slider limiting barrier 26 and the end, thereby improving the reliability of the slider 23. In some embodiments, as shown in Fig. 9, an end surface of the slide valve 2 is provided with mounting holes 237 extending in the axial direction and spaced apart in a circumferential direction of the end surface, and bolts penetrate through the slider limiting barrier 26 and are fixed in the mounting holes 237.

The above embodiments are merely exemplary embodiments of this application and are not intended to limit this application. Any modifications, equivalent substitutions, and improvements made within the principles of this application shall be included in the protection scope of this application as defined in the appended claims.

## Claims

1. A slide valve (2) applied to a screw compressor (1), the slide valve (2) comprising:
a valve body (21) having a cylindrical shape extending in an axial direction, with a side surface having a pressure discharge surface (211) that matches an outer peripheral contour of a rotor of the screw compressor (1);
a discharge chamber (22) provided at an end of the pressure discharge surface (211) along the axial direction;
a slider (23) provided in the discharge chamber (22), and configured to slide along a radial direction of the valve body (21), a shape of an outer edge of the slider (23) matching a shape of the pressure discharge surface (211); and
a spring (24) connected to the slider (23) and configured to drive the slider (23) to slide to a position where the outer edge of the slider (23) is flush with the pressure discharge surface (211).

2. The slide valve (2) according to claim 1, wherein
the discharge chamber (22) includes:
a support surface (221) separated from and disposed opposite to the pressure discharge surface (211); and
a guide rod (222) fixedly connected to the support surface (221) and extending in a direction parallel to a sliding direction of the slider (23), and
the spring (24) is sleeved on an outer periphery of the guide rod (222), and two ends of the spring (24) respectively abut against the support surface (221) and the slider (23).

3. The slide valve (2) according to claim 2, wherein
the slider (23) is provided with a first groove (233) and a second groove (234) that extend in the sliding direction and communicate with each other, and the first groove (233) is disposed at an end of the second groove (234) close to the pressure discharge surface (211), and
an inner diameter of the first groove (233) matches an outer diameter of the guide rod (222), and an inner diameter of the second groove (234) matches an outer diameter of the spring (24).

4. The slide valve (2) according to claim 3, wherein
the support surface (221) is provided with a third groove (223) and a fourth groove (224) that extend in the sliding direction and communicate with each other, and the third groove (223) is located at an end of the fourth groove (224) closer to the pressure discharge surface (211), and
an inner diameter of the third groove (223) matches the outer diameter of the spring (24), and an inner diameter of the fourth groove (224) matches the outer diameter of the guide rod (222).

5. The slide valve (2) according to any preceding claim, wherein
the discharge chamber (22) further includes:
a limiting surface (225) extending along the sliding direction of the slider (23) to form a sliding surface abutting against a side surface of the slider (23); and
a shoulder (226) located at an end of the limiting surface close to the pressure discharge surface (211) and protruding from the limiting surface (225), and
the side surface of the slider (23) is provided with a step portion (235) corresponding to the shoulder (226), and when the slider (23) slides to the position where the outer edge is flush with the pressure discharge surface (211), the step portion (235) abuts against the shoulder (226).

6. The slide valve (2) according to any preceding claim, wherein
the screw compressor (1) is a twin-screw compressor, the pressure discharge surface (211) includes a first pressure discharge surface (2111) and a second pressure discharge surface (2112) that respectively abut against a female rotor (12) and a male rotor (13) of the twin-screw compressor, and the first pressure discharge surface (2111) and the second pressure discharge surface (2112) are connected to each other, and
the slider (23) is V-shaped and includes a first outer edge portion (231) and a second outer edge portion (232) connected to each other, the first outer edge portion (231) is disposed corresponding to the first pressure discharge surface (2111), and the second outer edge portion (232) is disposed corresponding to the second pressure discharge surface (2112).

7. The slide valve (2) according to any preceding claim, wherein
the valve body (21) has a central axis and a slide rod mounting groove (25) extending along the central axis, and the slider (23) has an avoidance through hole (236) corresponding to a position of the slide rod mounting groove (25).

8. The slide valve (2) according to any preceding claim further comprising:
a slider limiting barrier (26) fixed to an end of the valve body (21) where the discharge chamber (22) is provided.

9. A screw compressor (1) comprising:
the slide valve (2) according to any preceding claim.
